# FASCICULE DE BREVET EUROPEEN

(11) **EP 2 195 685 B1**
(45) Date de publication et mention de la délivrance du brevet: **27.02.2013**
(21) Numéro de dépôt: 08842809.9
(22) Date de dépôt: 08.10.2008
(51) Int. Cl.: G01T 1/20, G01T 1/202, A61B 6/00

(54) **DISPOSITIF D'IMAGERIE AVEC UN SCINTILLATEUR**
BILDGEBEREINRICHTUNG MIT EINEM SZINTILLATOR
IMAGING DEVICE WITH A SCINTILLATOR

(30) Priorité: 10.10.2007 FR 0758202
(43) Date de publication de la demande: 16.06.2010
(60) Demande divisionnaire: 12189079.2
(73) Titulaire: Commissariat à l'Énergie Atomique et aux Énergies Alternatives, 75015 Paris (FR)
(72) Inventeur: PARTOUCHE-SEBBAN, David, F-91680 Bruyeres Le Chatel (FR); ABRAHAM, Isabelle, F-91410 Corbreuse (FR)
(74) Mandataire: Santarelli
(86) Numéro de dépôt international: PCT/FR2008/051822
(87) Numéro de publication internationale: WO 2009/053612

(56) Documents cités:
- EP-A- 0 413 043
- DE-A1- 10 154 522
- DE-A1- 19 849 772
- FR-A1- 2 657 694
- US-A- 5 773 829
- US-A1- 2004 136 493
- US-A1- 2004 155 197
- STROMSWOLD D C: "Comparison of sodium iodide, cesium iodide, and bismuth germanate scintillation detectors for borehole gamma-ray logging" 1980 NUCLEAR SCIENCE SYMPOSIUM. 1980. 1980 SYMPOSIUM ON NUCLEAR POWER SYSTEMS 5-7 NOV. 1980 ORLANDO, FL, USA, vol. ns-28, no. 1, février 1981 (1981-02), pages 290-294, XP002484905 IEEE Transactions on Nuclear Science USA ISSN: 0018-9499

## Description

La présente invention concerne un dispositif d'imagerie comprenant un scintillateur.

Les dispositifs d'imagerie radiographique (ou imageurs radiographiques) sont généralement utilisés pour radiographier un objet ou réaliser l'image d'une source radiative. Ils trouvent par conséquent application dans les contrôles non destructifs, la radiographie et la tomographie d'objets ou de sources de rayonnement, la gammagraphie, la neutronographie et dans toute technique utilisant l'imagerie de rayonnements ionisants X, beta, gamma, protons, neutrons, etc. Ces dispositifs peuvent répondre à de nombreux besoins allant du domaine médical à l'astronomie et au contrôle de colis pour la sécurité des transports.

On utilisera dans la suite le vocable rayonnement (ou rayon) pour mentionner tous les rayonnements ionisants qui peuvent donner lieu à une imagerie : X, beta, gamma, protons, neutrons, etc. De même, on utilisera le terme d'imagerie radiographique quel que soit le type de rayonnement considéré.

D'une manière générale, la radiographie d'un objet s'effectue en interposant l'objet entre une source de rayonnement et un imageur radiographique. Quant à l'imagerie d'une source de rayonnement, elle est obtenue en plaçant un collimateur entre la source et l'imageur radiographique. Le collimateur peut se réduire à un simple trou de petite dimension et l'image de la source est alors formée sur l'imageur, mais ce collimateur peut être plus complexe (par exemple dans le cas d'ouvertures codées multi-trous, fentes, etc. ou dans le cas d'imagerie de pénombre) et un traitement numérique des images obtenues peut être nécessaire pour reconstruire l'image de la source.

L'acquisition d'images radiographiques de la source (ou de l'objet) sous différents angles permet d'effectuer une reconstruction en trois dimensions de la source (ou de l'objet) par fusion numérique des données fournies par les différentes vues (technique dénommée tomographie). C'est le cas, par exemple, de la tomographie d'émission mono-photonique (TEMP, ou SPECT de l'anglais : "*Single Photon Emission Computed Tomography*").

L'imagerie radiographique s'est considérablement développée depuis la découverte des rayons X. Les films radiographiques ont, dans un premier temps, été couplés à des écrans renforçateurs dont la fonction était de convertir le rayonnement en lumière pour en faciliter l'enregistrement par le film. Progressivement, les films sont remplacés par des capteurs électroniques sensibles à la lumière (tels des CCD de l'anglais *"Charge Coupled Device",* des photodiodes, etc.) et les écrans renforçateurs sont remplacés par des scintillateurs. Le couplage optique entre le scintillateur et le capteur électronique se fait en général par des lentilles ou des fibres optiques avec une réduction de taille d'image et/ou une amplification de lumière éventuelles.

Les brevets US 6,031,892 et US 6,285,739, par exemple, décrivent des dispositifs utilisant un cristal scintillateur, un capteur CCD et une optique de couplage.

Dans les dispositifs d'imagerie radiographique de ce type, la qualité des images dépend principalement de la sensibilité et de la résolution spatiale de l'ensemble scintillateur optique de couplage capteur d'image et du niveau du flux de photons produisant le signal. En effet, le rayonnement ionisant dépose de l'énergie dans le scintillateur, qui la libère sous forme de lumière détectée par le capteur d'image électronique. Le niveau de bruit dans l'image (et donc le rapport signal à bruit) est ainsi principalement fonction de la densité du scintillateur, de la section efficace du matériau dont il est constitué (vis-à-vis du type et de l'énergie du rayonnement ionisant considéré), du nombre de photons lumineux émis par le scintillateur par unité de dose déposée dans le matériau par le rayonnement (rendement lumineux), de la transparence du scintillateur à son propre rayonnement lumineux et du couplage optique entre le scintillateur et le capteur et des performance du capteur lui-même.

La résolution spatiale est quant à elle directement liée à l'épaisseur du scintillateur. En effet, l'élargissement spatial du signal dans le scintillateur traduit l'étalement du dépôt de l'énergie des rayons incidents en son sein (phénomènes de diffusion des électrons et des photons secondaires créés par l'interaction du rayonnement avec le scintillateur). Plus le scintillateur est épais, plus l'étalement du dépôt d'énergie augmente. L'augmentation de l'épaisseur du scintillateur accroit la sensibilité et le rapport signal à bruit de l'image tout en dégradant la résolution spatiale. Il est donc difficile de réaliser un dispositif à la fois sensible et bien résolu. La difficulté augmente avec les rayonnements très pénétrants car il faut augmenter l'épaisseur du scintillateur pour capter une proportion suffisante de rayons incidents et atteindre un bonne Efficacité Quantique de Détection (DQE).

Les scintillateurs peuvent se classer en deux familles principales : les scintillateurs organiques ou plastiques (par exemple les écrans au phosphore) et les cristaux scintillateurs : Csl, Nal, germanate de bismuth (couramment dénommé BGO), silicates de lutécium (LSO, LYSO), etc.

Les cristaux scintillateurs possèdent un avantage sur les scintillateurs organiques car, dans la majorité des cas, leur densité et leur section efficace d'interaction avec le rayonnement sont plus élevées. Les épaisseurs à mettre en oeuvre, pour atteindre un rendement de détection donné, en sont significativement réduites et la résolution spatiale en est améliorée. De plus, certains cristaux possèdent des propriétés très utiles pour l'imagerie radiographique : émission lumineuse très brève temporellement autorisant des enregistrements rapides et répétitifs, rendement lumineux très élevé autorisant des pertes dans le couplage optique. Des cristaux performants sont par exemple décrits dans les demandes de brevets FR 2 874 021 et EP 1 754 981.

Actuellement la technologie de fabrication de ces cristaux très performants (à densité et rendement lumineux élevés), tels que le BGO, le LSO et le LYSO ne permet pas de produire des plaques de dimensions suffisantes pour les applications courantes (le besoin typique est de 300 x 300 mm², voire même de 400 x 400 mm²). Le LYSO et le BGO, par exemple, peuvent actuellement s'obtenir en plaques présentant un rendement lumineux uniforme et sans aucun défaut majeur jusqu'à des dimensions d'environ 60 x 60 mm² et 80 x 160 mm² respectivement (et pour des épaisseurs allant jusqu'à 30, voire même 40 mm).

Pour réaliser des scintillateurs de grand format (supérieurs à 100 x 100 mm²) il est possible d'utiliser des cristaux de Csl ou de Nal qui s'obtiennent dans des dimensions typiques de 200 x 200 mm² et 400 x 400 mm² respectivement. Néanmoins, de nombreux défauts demeurent présents dans des cristaux de Csl et Nal de ces dimensions et ces cristaux sont plus ou moins hygroscopiques. De plus, les performances du dispositif d'imagerie sont moins bonnes avec des cristaux en Csl ou en Nal qu'avec les cristaux plus denses (tels que BGO, LSO, LYSO) pour les raisons évoquées précédemment.

Le brevet US 7,057,187 et la demande de brevet FR 2 625 332 décrivent des systèmes d'imagerie radiographique utilisant un cristal scintillateur (préférentiellement du Csl) couplé avec un capteur CCD au moyen d'une optique, pour des rayonnements X dont l'énergie est de 1 à 100 keV. Les épaisseurs de cristal sont respectivement de 50 µm et de 1 mm. L'épaisseur du scintillateur a été limitée pour conserver une bonne résolution spatiale au détriment de la sensibilité. Cela conduit soit à une dégradation de la qualité de l'image radiographique, soit à l'augmentation du temps de pose nécessaire à l'obtention d'une statistique de détection suffisante, soit à l'augmentation de la puissance de la source. Cela peut être préjudiciable dans le cas des applications médicales, par exemple, dans lesquelles la dose reçue par le patient doit être réduite au strict nécessaire. Cela peut aussi être pénalisant pour le contrôle de colis car le temps d'immobilisation est déterminant pour que le système soit opérationnel.

La publication *"*A high quantum efficiency prototype video based portal imaging system" de Samant et al., in Journal of X-ray Science and Technology 14 (2006, pp. 161-175) donne un exemple de scintillateur Csl de 12 mm d'épaisseur et de surface 170 x 170 mm² couplé à une CCD au moyen d'un objectif photographique. Ce dispositif est limité par les dimensions disponibles de scintillateur. Par ailleurs, il est difficile de fabriquer un cristal scintillateur de grande dimension sans aucune imperfection dans la masse. Dans l'exemple cité, le cristal présente environ 20 à 30 imperfections (bulles d'air) réparties aléatoirement dans la masse du scintillateur. Ces défauts diffusent la lumière générée par le scintillateur et induisent des pics d'intensité (indésirables) sur l'image finale. Cependant, pour la fabrication de scintillateurs de petite dimension et/ou de faible épaisseur, il est possible de sélectionner et de tailler le cristal sur des portions exemptes de tout défaut.

Une autre solution connue pour réaliser des scintillateurs de grand format est d'utiliser la technique de la segmentation, qui permet d'obtenir une bonne résolution spatiale tout en conservant une sensibilité suffisante dans les dispositifs d'imagerie radiographique à haute énergie. Cette technique s'applique couramment aux scintillateurs de type BGO, LSO, LYSO, BaF₂, etc.

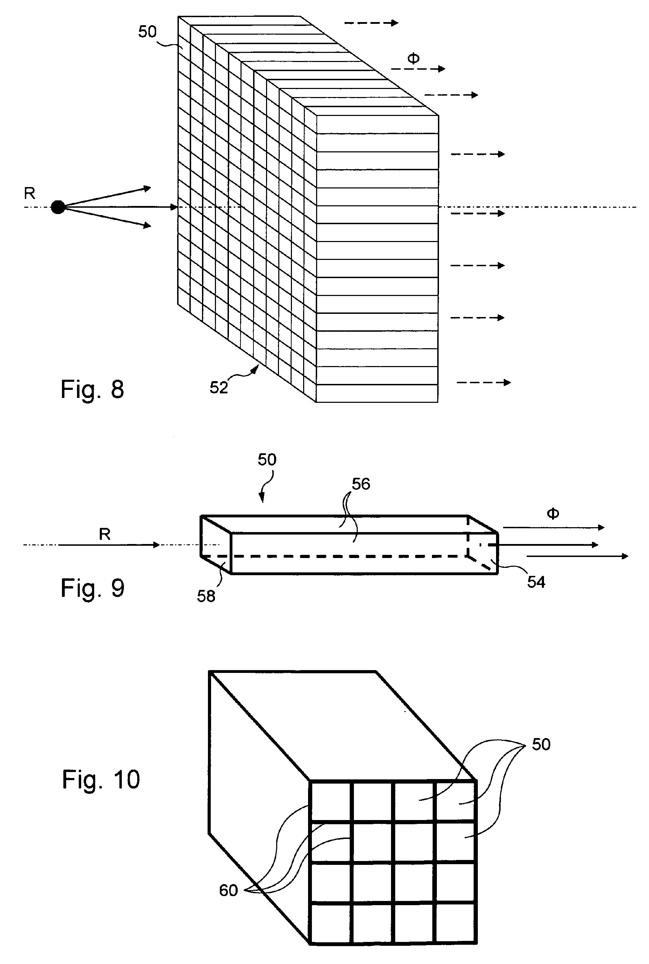

Selon cette technique, la face du scintillateur recevant le rayonnement est divisé en petits éléments 50 (figure 9), optiquement séparés et qui transmettent donc chacun la lumière (photons, en général dans le domaine du visible) générée en leur sein. Chaque élément forme donc un guide de lumière et les éléments sont assemblés mécaniquement pour former le scintillateur 52 (figure 8).

En pratique, les petits éléments 50 sont séparés par des parois opaques afin d'empêcher la lumière produite dans chacun d'eux d'atteindre les éléments adjacents. La lumière est éventuellement guidée vers la face de sortie 54 du scintillateur grâce à un traitement des faces latérales 56 des éléments scintillateurs (faces adjacentes aux autres éléments similaires, voir figure 9). Ce traitement est généralement adapté pour obtenir une réflexion spéculaire (passant, en outre, par le polissage des faces latérales des segments) de manière à optimiser le rendement lumineux. En effet, la reprise d'image est souvent en contact avec le scintillateur et le couplage optique s'effectue sur une large ouverture numérique (par exemple, dans le cas du couplage du scintillateur à un pavé de fibres optique ou à un amplificateur de luminance). Cependant, dans le cas d'un couplage optique sur une ouverture numérique plus faible (cas d'un système utilisant une CCD et un objectif photographique), il est plus adapté (et moins couteux) de favoriser la diffusion des faces latérales des segments pour augmenter le rendement lumineux dans la direction de l'axe des segments (voir, par exemple, la publication de Quillin & Aedy, "A pixelated BGO scintillator array for high energy flash radiography", Nuclear Symposium Conference Record, IEEE 2004, Vol. 2 pp. 794-797.

La face arrière 58 (opposée à la reprise de la lumière) est quant à elle fréquemment traitée de manière à réfléchir la lumière et augmenter le flux lumineux envoyé vers le détecteur (il peut s'agir d'un dépôt métallique ou simplement d'une peinture blanche).

Dans certains cas, des parois latérales 60 sont ajoutées entre les éléments 50 de scintillateur (figure 10) pour réduire la diffusion des particules secondaires (électrons, photons par exemple). Ces parois sont généralement constituées de métal (aluminium, acier, tungstène).

Les brevets et demandes de brevet US 3,344,276, GB 2 167 279, GB 2 034 148, US 5,773,829, US 5,329,124, US 6,344,649, US 2005/0104000, US 7,238,945 US25005/0115197 décrivent différents scintillateurs segmentés construits sur ce principe.

Le principal inconvénient des imageurs radiographiques à scintillateur segmenté réside dans leur coût car ils nécessitent la découpe et l'assemblage minutieux de très nombreux éléments car la taille de pixel doit être proche de la résolution spatiale recherchée. Par ailleurs, il est difficile d'obtenir un assemblage parfaitement régulier et dont la sensibilité ne varie pas trop d'un segment à un autre. La correction de ces défauts implique la mise en oeuvre de traitements postérieurs numériques de l'image, plus ou moins élaborés, qui induisent une perte supplémentaire sur la qualité de l'image finale (rapport signal à bruit et résolution effective).

Enfin, des structures différentes ont été proposées pour optimiser le couplage optique entre le scintillateur et le capteur, l'idée étant de limiter une partie de la dispersion de la lumière issue du scintillateur et de la guider vers le détecteur. Les brevets US 6,881,960 et US 7,112,797 proposent des solutions de scintillateur monobloc semi-segmenté sur une partie de son épaisseur. Le brevet US 5,753,918 décrit des éléments scintillateur courbes avec des traitements optiques réfléchissant ou diffusifs. Le brevet US 6,737,103 propose d'associer une matrice de microlentilles optiques pour guider la lumière produite dans le scintillateur. Ces solutions augmentent le coût du scintillateur et ne résolvent pas le problème des scintillateurs cristallins de grand format. De plus, la structuration conduit, comme pour les scintillateurs segmentés, à des défauts gênants sur les images radiographiques.

La présente invention a pour but de proposer un dispositif d'imagerie radiographique basé sur un module scintillateur de grandes dimensions.

À cette fin notamment, on propose un dispositif d'imagerie comme décrit dans la revendication 1.

Les photons considérés ici sont des photons lumineux dont le spectre correspond à la plage de longueur d'ondes de la lumière réémise par le matériau scintillateur, en général dans le domaine du spectre visible.

Le module scintillateur est ainsi formé d'un assemblage de plusieurs plaques cristaux scintillants comprenant au moins deux plaques. La solution proposée permet de réaliser un dispositif d'imagerie radiographique de format supérieur à la limite de dimension de fabrication des cristaux scintillants essentiellement exempts de défaut. Elle permet en outre de fournir une alternative moins coûteuse à la filière détecteur segmenté, tout en permettant éventuellement de réaliser des systèmes d'imagerie radiographiques à haut pouvoir d'arrêt et bien résolus spatialement.

Les plaques ont par définition même de ce mot, une dimension (l'épaisseur des plaques) relativement faible, en tout cas inférieure aux deux autres dimensions générales de la plaque ; en pratique, l'épaisseur est généralement inférieure à la moitié de la plus petite des deux autres dimensions (et donc inférieure à la moitié de chacune des deux autres dimensions). La tranche de chaque plaque correspond, également par définition, aux faces de cette plaque orientées selon l'épaisseur, c'est-à-dire selon un axe perpendiculaire aux deux plus grandes faces de la plaque (faces optiques).

Les plaques sont généralement parallélépipédiques mais des formes différentes (pavés hexagonaux par exemple) peuvent être utilisées. Il est aussi possible de réaliser des scintillateurs courbes (cylindriques par exemple) par assemblage de plaques possédant une certaine courbure.

L'utilisation de moyens d'assemblage (ou de liaison) absorbants pour les photons concernés (c'est-à-dire pour la lumière réémise par le matériau scintillateur) évite toute conséquence néfaste de l'assemblage (liée à la présence d'un plan de joint) sur l'image générée par le dispositif. Le coefficient d'absorption vis-à-vis des photons lumineux émis par le scintillateur est en pratique d'au moins 50% sur l'épaisseur de la liaison, c'est-à-dire selon une direction essentiellement perpendiculaire à la tranche des plaques assemblées.

Les moyens de liaison peuvent même posséder un coefficient d'absorption d'au moins 90% sur l'épaisseur de ladite liaison, ce qui permet de diminuer très fortement la diffusion de lumière au niveau des plans de joint.

De manière générale, le pourcentage d'absorption pourra être adapté en fonction de l'application concernée de manière à générer le niveau de signal souhaité à l'endroit du joint, par exemple en choisissant la composition des moyens de liaison comme expliqué plus loin. Il est, entre autres, possible d'obtenir un niveau de signal au niveau du joint proche du signal moyen produit par le scintillateur dans son ensemble.

On prévoit généralement en pratique que le second matériau est identique au premier matériau, même s'il est possible dans certaines applications d'utiliser deux matériaux distincts.

Selon un mode de réalisation envisageable, le premier matériau est un cristal, dont les propriétés de ré-émission de lumière sont intéressantes comme déjà expliqué. Dans ce cas, il peut s'agir d'un matériau de masse volumique supérieure à 5 g/cm³. De tels cristaux ont en effet un fort pouvoir d'arrêt et donnent donc des résultats intéressants dans l'application étudiée ici. En variante, il pourrait s'agir de matériaux scintillateurs organiques ou plastiques.

Dans le mode de réalisation proposé et décrit plus loin, les moyens de liaison comprennent une colle absorbante dans une partie au moins du spectre visible. Cette colle absorbante comporte par exemple un additif colorant, tel qu'une poudre de carbone colloïdal.

On propose également un module scintillateur comprenant un scintillateur comme il vient d'être évoqué et un élément de structuration (relativement rigide) essentiellement parallèle à l'une des deux grandes faces de la (première) plaque (de préférence la face d'entrée) et assemblé à cette face de la (première) plaque et à une face de la deuxième plaque au moins. On obtient ainsi un module suffisamment rigide pour des applications pratiques.

On propose aussi un module scintillateur comprenant un scintillateur comme évoqué précédemment ou un module scintillateur comme il vient d'être évoqué, ainsi qu'un cadre de structuration enserrant le scintillateur (ou le module scintillateur évoqué ci-dessus le cas échéant) de manière à positionner et à rigidifier le scintillateur. Le cadre joue ainsi le rôle d'interface mécanique.

L'invention propose ainsi un dispositif d'imagerie comprenant un scintillateur comme décrit ci-dessus, un capteur d'image et des moyens optiques de couplage du scintillateur au capteur. Dans ce dispositif, la (première) plaque et laseconde plaque sont chacun aptes à former une image (comprenant une pluralité de pixels) destinée au capteur.

On prévoit par exemple que les dimensions de la première plaque et celles de la deuxième plaque orientées selon le plan d'extension de la plaque (c'est-à-dire parallèles aux deux plus grandes faces de la plaque ou perpendiculaires à la direction de l'épaisseur de la plaque) sont supérieures à dix fois la résolution spatiale du dispositif d'imagerie dans le plan du scintillateur, c'est-à-dire que chaque plaque ou bloc forme pour le capteur une image comprenant plus de 10 pixels dans chaque dimension. En pratique, chaque plaque correspond même fréquemment à plus de 50 pixels du capteur dans chaque dimension.

Les moyens optiques peuvent ainsi collecter les photons émis dans une direction essentiellement perpendiculaire au plan d'extension de la (première) plaque.

Le couplage optique entre le scintillateur et le capteur peut être réalisé avec une faible ouverture numérique objet, à savoir en général une ouverture inférieure à 20 degrés de demi-angle. L'ouverture numérique objet peut même être inférieure à 5 degrés de demi-angle.

On propose un procédé de fabrication d'un scintillateur, les étapes suivantes :
- formation d'une première plaque d'un premier matériau apte à émettre des photons en fonction d'un rayonnement incident et d'une seconde plaque d'un second matériau apte à émettre des photons en fonction du rayonnement incident ;
- assemblage de la première plaque et de la seconde plaque par la tranche de la première plaque avec interposition de moyens de liaison absorbants.

On peut également prévoir que les moyens de liaison soient compressibles et que le procédé comprenne une étape d'application d'une pression selon une direction parallèle au plan d'extension de la première plaque.

Comme déjà mentionné, on peut envisager en outre une étape d'assemblage d'un élément de structuration essentiellement parallèle à l'une des deux grandes faces de la plaque avec cette face de la plaque et avec une face du bloc.

D'autres caractéristiques et avantages de l'invention apparaitront à la lumière de la description qui suit, faite en référence aux dessins annexés dans lesquels :
- la figure 1 représente le schéma de principe de réalisation d'un dispositif d'imagerie radiographique conforme à l'invention ;
- la figure 2 représente une forme de réalisation envisageable pour le dispositif de la figure 1, utilisant un cadre rigide ;
- la figure 3 représente une forme de réalisation envisageable pour le module scintillateur de faible épaisseur du dispositif de la figure 1 ;
- la figure 4 représente les éléments essentiels intervenant dans la partie optique du dispositif de la figure 1 ;
- la figure 5 compare deux scintillateurs d'indices différents ;
- la figure 6 donne le schéma général d'un exemple de mise en oeuvre pratique du dispositif de la figure 1 ;
- la figure 7 est une vue explosée des éléments concrètement employés dans l'exemple de la figure 6 ;
- les figures 8 à 10, déjà décrites, présentent la technique connue des scintillateurs segmentés.

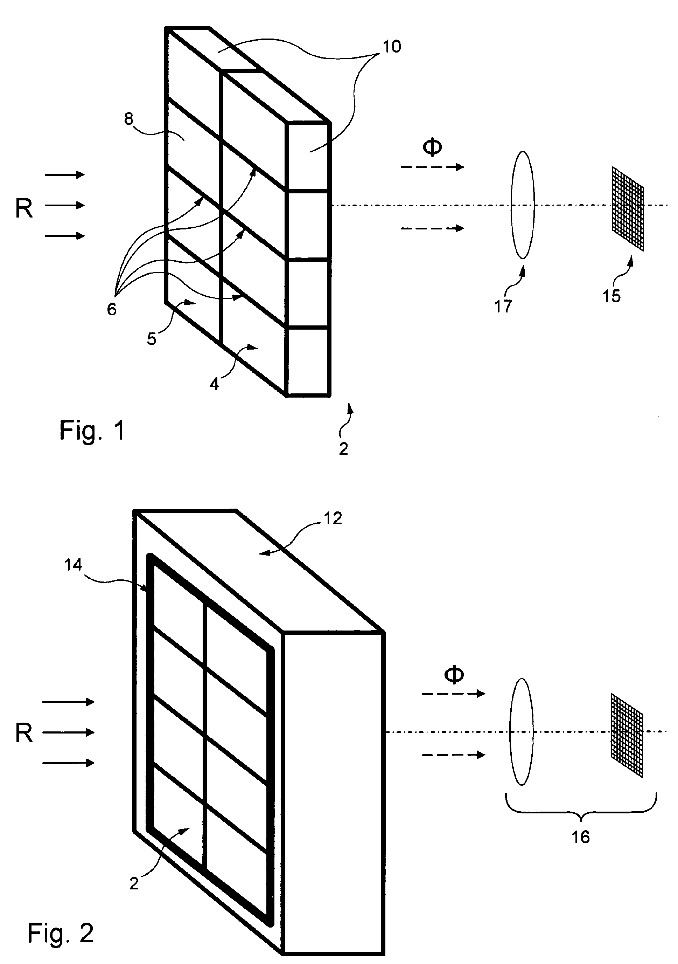

On décrit en référence à la figure 1 un procédé d'assemblage des cristaux entre eux en vue de former un module scintillateur 2. Le mode de réalisation décrit ici prévoit les étapes suivantes :
- Les plaques élémentaires 4, 5 sont taillés dans le même massif cristallin (ou proviennent d'une même série de production) afin de présenter le même rendement lumineux et permettre la fabrication d'un imageur de sensibilité uniforme sur toute sa surface. Les plaques élémentaires sont aussi polis optiquement sur toutes les faces et sont de la même épaisseur pour limiter les sources de diffusion de lumière dans le module fini. Un soin particulier est apporté au polissage des faces (tranches) des plaques destinées à être collées entre elles comme décrit ci-après : en particulier, il faut veiller à ne pas casser/chanfreiner les arrêtes de ces faces lors du polissage sous peine d'obtenir, sur le module assemblé, des interfaces dont l'épaisseur apparente est trop importante.
- Une colle adéquate est choisie en fonction du matériau scintillateur : elle doit permettre une bonne adhésion sur le matériau sélectionné mais doit aussi être suffisamment fluide pour permettre le collage sous presse des plaques élémentaires afin de réduire au minimum l'épaisseur des joints de colle (donc des interfaces entre les plaques ou blocs). Une colle LOCTITE^{®} 326 par exemple peut convenir.
- En général, les colles disponibles dans le commerce ne sont pas absorbantes. La colle sélectionnée est alors mélangée à un additif colorant dont le rôle est d'absorber les photons lumineux produits par le scintillateur. Cet additif peut être, par exemple, une fine poudre de carbone colloïdal (du même type que celui utilisé pour les toners de photocopieuse ou d'imprimante) de manière à rendre la colle suffisamment absorbante sans pour autant trop modifier ses performances de collage. L'ajout de poudre de carbone à raison de quelques pourcents en volume est en général suffisant pour donner à la colle les propriétés optiques escomptées.
- La colle rendue absorbante est déposée sur les tranches des plaques 4 à assembler.
- L'assemblage par collage s'effectue sous presse (en appliquant une pression légère simplement destinée à chasser un maximum de colle et réduire l'épaisseur du joint au minimum) et on nettoie l'excédent de colle avant polymérisation. Dans le cas de l'assemblage de cristaux sur une longueur de 10 à 15 cm (et sur une épaisseur de un à quelques centimètres), il est possible de réaliser par exemple des joints de colle 6 de 100 à 200 µm d'épaisseur.

On peut remarquer que, bien que les cristaux scintillateurs formant le module décrit ci-dessus sont de même nature (avec les avantages indiqués), il est possible en variante de créer un module scintillateur constitué de cristaux de natures différentes.

On décrit à présent en référence aux figures 1 à 3 un traitement envisageable de la face arrière 8 et des faces latérales 10 du module en vue d'optimiser la résolution et l'uniformité lumineuse (homogénéité du rendement lumineux) du module scintillateur.

Pour ce qui concerne les faces latérales 10 du module 2, afin de conserver une bonne uniformité d'image sur les bords (au travers de l'uniformité du rendement lumineux spatial), on propose de les rendre absorbantes, peu diffusantes et opaques afin de limiter les effets de bord. Ce résultat s'obtient grâce au poli optique des faces latérales 10, sur lesquelles on applique une peinture noire mate (ou tout autre revêtement absorbant et opaque).

Dans le cas d'un produit industriel, il est généralement nécessaire comme représenté en figure 2 de coller le module dans un support/cadre rigide 12 (en plastique ou en métal) qui pourra éventuellement servir de liaison avec le système d'acquisition d'image 16. Le cas échéant, il faut alors modifier les propriétés optiques de la colle (ou de l'élastomère) utilisée en y incorporant de la poudre de carbone colloïdal selon le même procédé que celui décrit pour le collage des cristaux entre eux. L'épaisseur du joint de colle 14 ou de l'élastomère n'a pas nécessairement besoin d'être mince sur ces faces latérales 10 et il peut même être utile d'utiliser un joint de colle 14 souple et épais pour découpler les chocs et les vibrations éventuels transmis au cristal. En particulier, si le module 2 est destiné à une utilisation dans un environnement induisant des chocs ou des vibrations importantes (applications aéronautiques ou spatiales par exemple), on peut éventuellement envisager de ne pas polir les faces externes de l'assemblage (en les laissant brutes de sciage) pour favoriser l'adhérence et la tenue de la colle. Bien que la rugosité du bord induira alors de la diffusion de lumière et que le joint de collage 14 apparaîtra plus brillant que la masse du cristal, ce défaut est acceptable dans les applications dans lesquelles l'image utile est centrée sur le détecteur et peu d'information utile se trouve au niveau des bords de l'image.

Une possibilité d'amélioration de ce procédé est de repolir après collage les faces d'entrée et de sortie du scintillateur (perpendiculaires au plan de joint) afin de réduire l'épaisseur de colle près de la surface. En effet, celle-ci tend à augmenter en raison de micro-chanfreins résiduels ou de micro-éclats présents sur les arrêtes des plaques et des blocs.

Enfin, comme illustré en figure 1, la face arrière 8 du module (située du coté opposé au capteur électronique d'image) doit, d'une part, être opaque pour que le capteur ne détecte pas les sources de lumière ambiante observables au travers du cristal et, d'autre part, être absorbante pour ne pas dégrader la résolution de système (par réflexion de lumière en direction de l'optique de détection). La mise en place d'un écran noir mat (par exemple une feuille de papier cartonné noir mat dont la couleur noire et l'aspect rugueux remplissent la fonction avec efficacité) est une solution intéressante. L'application d'une peinture noire mate sur la face arrière 8 du scintillateur est également possible mais moins intéressante sur le plan de l'efficacité : le fini de la couche de peinture (coté capteur d'image) serait en effet parfaitement lisse compte tenu du poli optique du cristal (qui est nécessaire pour garantir une bonne uniformité de l'image produite) et le revêtement conserverait donc un aspect brillant, ce qui limiterait le pouvoir absorbant escompté.

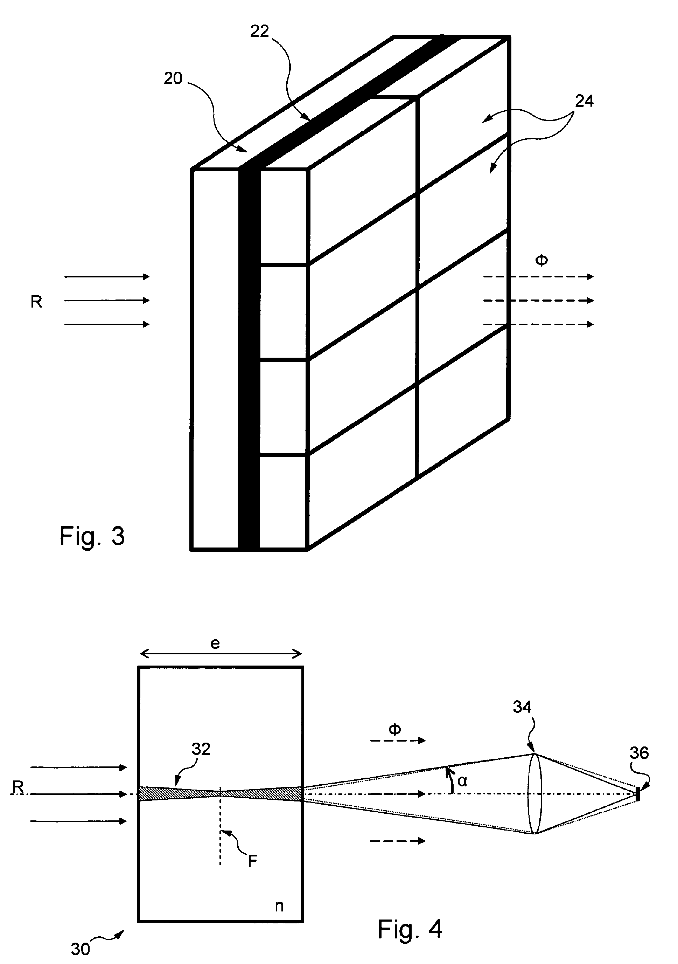

Pour réaliser un module scintillateur de grandes dimensions mais de faible épaisseur (typiquement inférieure à 3-4 mm), on propose par ailleurs ici d'utiliser une structuration 20 (par exemple sous forme de plaque) adaptée pour conserver une bonne rigidité de l'ensemble des plaques de matériau scintillateur. Ainsi par exemple, la face arrière du scintillateur doit être collée sur un élément structurant 20 comme illustré en figure 3, qui ne perturbe pas trop les performances du système et dont le matériau doit être choisi en fonction du rayonnement ionisant considéré. Par exemple, dans le cas du rayonnement X ou gamma, les matériaux métalliques seront à éviter parce qu'ils introduisent une atténuation du rayonnement (qui peut-être importante pour les plus basses énergies) et qu'ils produisent des électrons, sous l'effet du rayonnement, qui interagissent avec le scintillateur et dégradent partiellement la résolution spatiale du système. Un matériau peu dense et non luminescent sous l'effet du rayonnement serait plus adapté (tel que par exemple, le Delrin®, qui est un polyoxyméthylène). Comme il est nécessaire de coller les cristaux assemblés sur la plaque structurante 20 (et que l'utilisation de l'écran noir mat n'est donc plus possible dans ce cas), il est préférable de le faire avec une colle ou un élastomère opaque et absorbant 22, comme précédemment décrit pour le collage des faces externes de l'assemblage sur un cadre métallique.

On décrit à présent un exemple d'intégration d'un tel scintillateur dans un dispositif d'imagerie utilisant un capteur CCD.

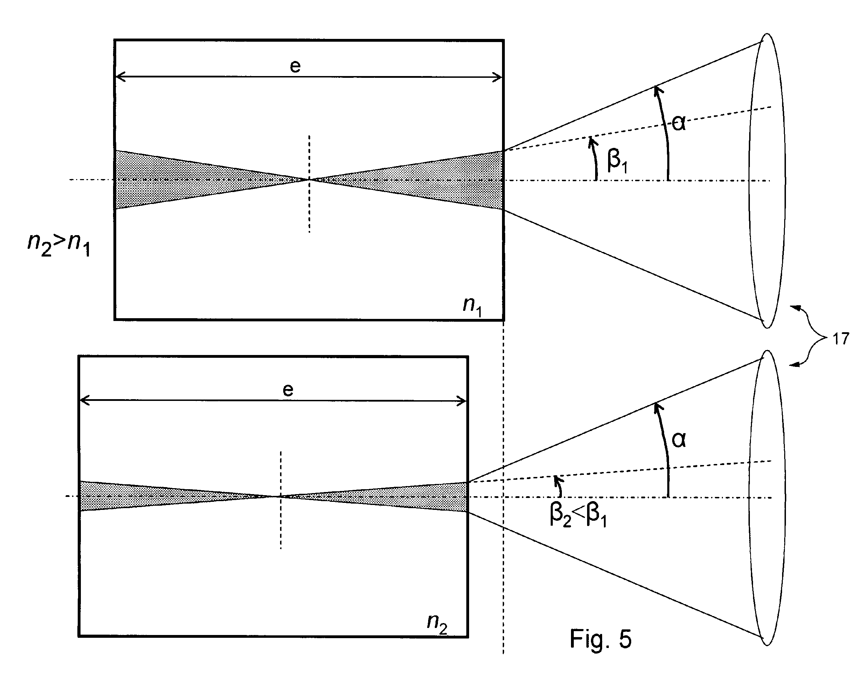

De manière générale, lorsque le module scintillateur 30 est couplé à un capteur d'image sous une faible ouverture numérique, par exemple, au moyen d'un capteur CCD 15 et d'un objectif photographique 17, 34 (comme illustré en figure 1 et montré de manière plus détaillée en figure 4), l'utilisation de modules épais (multi-centimétriques) permet d'augmenter l'efficacité quantique de détection du système sans pour autant dégrader la résolution du système de manière rédhibitoire (elle reste en effet de 1 à quelques millimètres). Plusieurs paramètres contribuent à la limite de résolution du système dans un tel dispositif et, en particulier, les deux facteurs dominants sont la dispersion du dépôt d'énergie dans le scintillateur et la taille du voxel 32 (volume élémentaire observé par un pixel CCD 36). Les dimensions du voxel 32 dépendent de l'indice optique n et de l'épaisseur du scintillateur, de l'ouverture numérique objet α de l'objectif 34 (et de sa résolution), ainsi que de la taille du pixel CCD 36, comme illustré en figure 4. La dimension radiale du voxel 32 au niveau des faces d'entrée et de sortie du cristal, diminue avec l'accroissement de la valeur de l'indice optique du cristal. La figure 5 illustre le couplage d'une optique donnée avec des cristaux de même épaisseur mais d'indices différents n₁ et n₂, pour une ouverture numérique objet α fixée.

Pour minimiser la taille du voxel observée par un pixel CCD 36 et produire ainsi un imageur bien résolu, ce module scintillateur doit être couplé à un capteur d'image (CCD par exemple) avec une reprise optique qui collecte la lumière émise par le module sous une faible ouverture numérique objet, typiquement de l'ordre de 5 degrés de demi-angle (noté α sur les figures 4 et 5) pour des modules d'épaisseurs multi-centimétriques.

Ce type de couplage s'obtient par exemple aisément avec un objectif photographique du commerce, dont le diamètre d'ouverture est typiquement inférieur à 8 cm, à condition de placer l'objectif, et le capteur CCD, à une distance suffisante du module scintillateur (par exemple, pour un objectif dont le diamètre d'ouverture est de 8 cm, il faut placer l'objectif à plus de 45 cm pour observer le module sous une ouverture numérique objet de moins de 5 degrés de demi-angle).

Cette configuration de couplage réduit cependant la quantité de photons lumineux atteignant le capteur CCD. Pour une application donnée, on peut donc envisager de limiter cette distance entre le module scintillateur et l'optique de couplage à la valeur minimale acceptable pour la résolution souhaitée et de sélectionner un capteur CCD dont la sensibilité permet de compenser ce faible rendement de collection de la lumière. Si les niveaux de rayonnement à détecter sont très faibles, il peut même être nécessaire de sélectionner un capteur doté d'un amplificateur de luminance ou d'utiliser un capteur refroidi ou amplifié. Un amplificateur de luminance peut aussi être nécessaire pour sa fonction d'obturation rapide, mais sa présence contribuerait à diminuer sensiblement la résolution du système. Les cristaux denses (donc à pouvoir d'arrêt élevé) et à haut rendement lumineux mentionnés précédemment sont aussi tout indiqués pour la détection des faibles niveaux de rayonnement.

Pour optimiser la résolution du système global, le plan objet de l'objectif 34 (plan de focalisation F) doit être localisé à l'intérieur du module scintillateur. La position optimale dépend de nombreux paramètres : indice du cristal scintillant, ouverture numérique objet de l'objectif (paramètre α sur la figure 4), taille du pixel 36, grandissement et résolution de l'objectif 34, étalement du dépôt d'énergie dans le scintillateur (pour le rayonnement ionisant considéré), etc. En pratique, si l'épaisseur de cristal a été adaptée au rayonnement considéré (c'est-à-dire assez épais pour arrêter un pourcentage suffisant de particules ionisantes mais pas trop pour limiter la perte de résolution du dispositif), une configuration optimale au premier ordre est de dimensionner le système pour que l'objectif focalise en plein milieu du volume du module scintillant (voir figure 4).

Le grandissement de la reprise optique (choisi via la focale de l'objectif) doit permettre de minimiser l'impact du plan de joint formé par la colle absorbante déposée entre les plaques constituant le scintillateur en le projetant sur un petit nombre de pixels : par exemple, un objectif photographique standard du commerce permet de dé-grandir la scène observée de plusieurs facteurs entiers pour la projeter sur un champ adapté aux films 24 x 36 mm. La taille typique d'un pixel CCD grand public étant d'environ 10 µm et la dimension du joint de collage de l'ordre de 100 à 200 µm, un dé-grandissement d'un facteur 5 par exemple, permet de réduire l'impact du plan de joint à une dimension de 2 à 4 pixels sur un capteur CCD.

Le système, tel qu'il est décrit, permet de réaliser un dispositif d'imagerie radiographique utilisant un module scintillateur de grande dimension constitué d'un assemblage de plusieurs plaques de cristaux scintillants, en limitant l'influence des interfaces entre les cristaux assemblés sur l'image radiographique finale.

Le procédé de fabrication décrit ci-dessus permet d'obtenir un scintillateur dans lequel la quantité de lumière provenant du joint de collage (donc le signal au niveau du joint de collage) est minimisée. S'il est nécessaire d'obtenir des images radiographiques dans lesquelles les joints de collage ne sont pas (ou quasiment pas) apparents, il est généralement possible d'y parvenir en choisissant la proportion adéquate de poudre de carbone colloïdal et de colle de manière à générer le même niveau de signal à l'endroit du joint que le signal moyen produit par le cristal. On peut noter en effet que la proportion du mélange dépend du système complet dans sa configuration optique définitive, en particulier de l'épaisseur du cristal, de sa nature et de la résolution du système optique et du capteur. Pour la déterminer, on peut procéder par exemple à différents essais de collage sur de petits échantillons de cristaux (d'épaisseur représentative de l'épaisseur finale de l'assemblage) et de les caractériser au moyen de la source de rayonnement dans les conditions finales d'utilisation (*i.e*. avec l'objectif et le capteur sélectionnés). Pour gagner du temps dans cette expérimentation, il est recommandé de réaliser des essais de mélange de poudre de carbone et de colle et d'observer leur transparence visuellement avant de procéder aux essais. Un mélange d'apparence semi-transparent est un bon indicateur de départ.

On remarque que, de manière générale, il est préférable d'utiliser au moins un miroir de renvoi entre le module scintillateur et le système optique (objectif et CCD) pour placer hors flux radiatif la CDD (mais aussi les optiques de l'objectif qui pourraient émettre de la lumière par effet Cerenkov pour certains type et énergie de rayonnement). Par ailleurs, la structure mécanique qui encapsule et positionne l'ensemble des éléments de la chaîne radiographique doit être étanche à la lumière extérieure et ses parois intérieures doivent être peintes au moyen d'une peinture noire mate pour atténuer toute réflexion parasite de lumière en direction de la CCD.

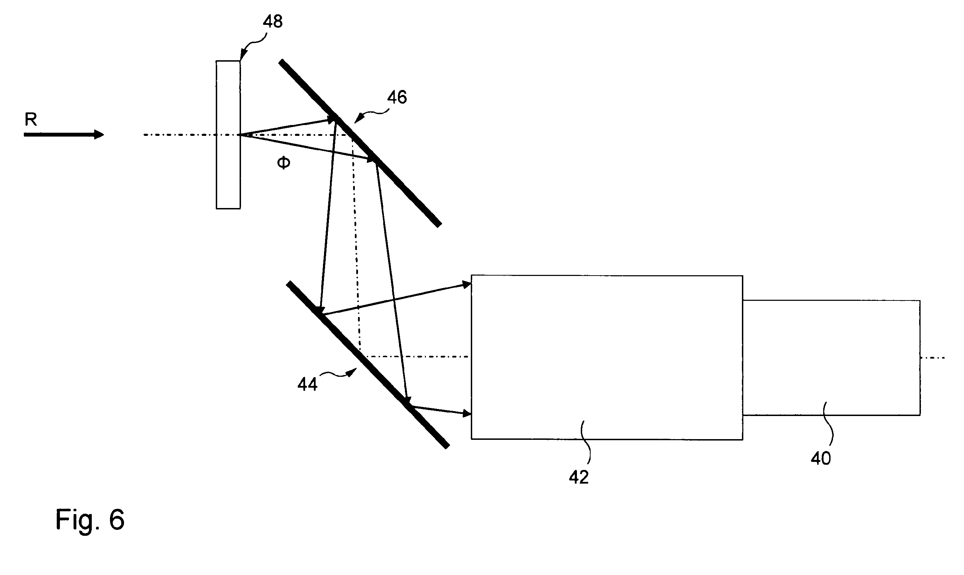

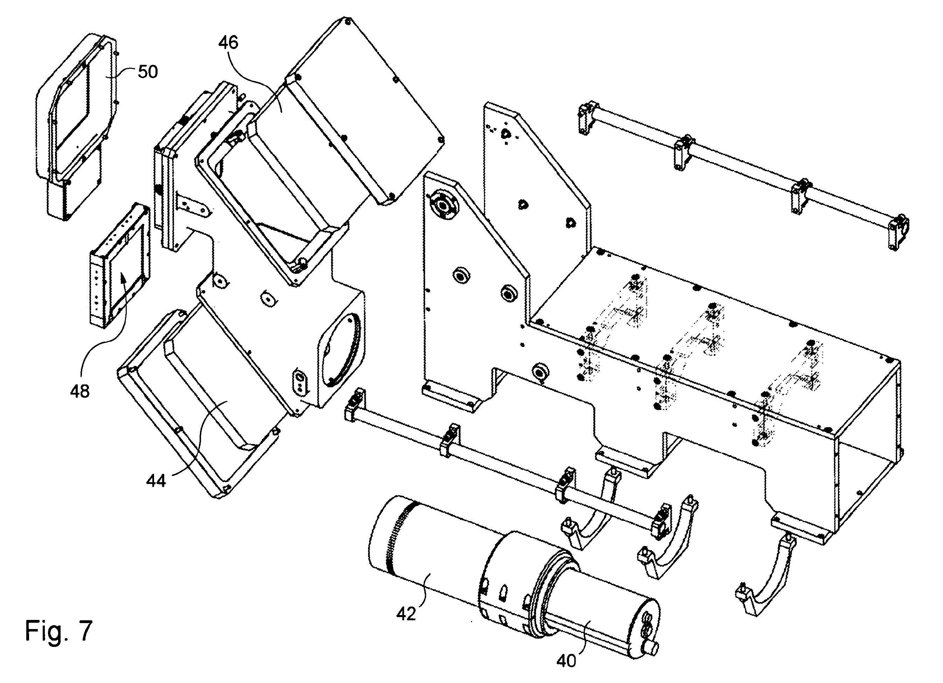

On décrit ainsi à présent en référence aux figures 6 et 7 une mise en oeuvre pratique de l'objet qui vient d'être décrit, constituée des éléments suivants :
- Un scintillateur en BGO de 165 x 165 mm² de 10 mm d'épaisseur constitué de 2 plaques de 82,5 x 165 x 10 mm³ assemblées selon le procédé décrit ci-dessus.
- Une caméra CCD 40, de type LN/CCD-2048SB/2, fabriquée par la société ROPER SCIENTIFIC, et dotée d'une matrice SiTe SI-424A de 49 mm de côté, composée de 2048 x 2048 pixels de 24 µm de coté. Cette matrice amincie est éclairée par l'arrière (augmentant ainsi sa sensibilité dans le visible d'un facteur 2) et refroidie par azote liquide.
- Un objectif de reprise d'image 42, composé de sept lentilles, dont la référence est XCRL 162, a été réalisé par la société LINOS aux États Unis (et distribué en France par Schneeberger).
- Deux miroirs de renvoi 44, 46, permettant de déporter la CCD hors du flux ionisant.
- L'orifice d'entrée, dans lequel est placé le module scintillateur 48, est protégé par un capot 50 en alliage d'aluminium (AS7G) dont l'épaisseur est de 7 mm sur tout le champ utile de la caméra.

Les principales caractéristiques de la caméra CCD sont les suivantes : efficacité quantique supérieure à 65% entre 400 et 600 nm, écart à la linéarité inférieure à 1% sur toute la dynamique, température nominale de fonctionnement : -100°C, courant d'obscurité : 12 e-/pixel/heure à -100°C, bruit de lecture : 6.6 e- à 50 kHz, dynamique de 9280 à S/B = 1 et de 6500 à S/B = 10, fréquence de lecture de la matrice CCD : 50 kHz, temps de lecture de la matrice (à 50 kHz) : 84 secondes, facteur de conversion de l'électronique : 1.24 e-/LSB.

Les principales caractéristiques de l'objectif sont les suivantes : gamme prévue d'utilisation : de 420 nm à 600 nm de longueur d'onde, diamètre du champ objet : 270 mm, focale : 162 mm, tirage objet : 840 mm, tirage image : 19 mm, grandissement : -0.258, nombre d'ouverture effectif (coté CCD) : 1.79, contraste de 86% pour une mire de pas 4 pl/mm, distorsion inférieure à 0,1%, transmission à 490 nm de longueur d'onde : 86%, longueur de l'objectif: 392 mm, diamètre extérieur de l'objectif : 190 mm, traitement antireflet entre 420 et 560 nm de longueur d'onde, diamètre utile de la lentille d'entrée (coté scintillateur) : 122 mm.

Les modes de réalisation qui précèdent ne sont que des exemples envisageables pour la mise en oeuvre de l'invention, qui ne s'y limite pas.

## Revendications

1. Dispositif d'imagerie comprenant un scintillateur, un capteur d'image et des moyens optiques de couplage du scintillateur au capteur, le scintillateur (2) comprenant une première plaque (4) d'un premier matériau apte à émettre des photons (Φ) en fonction d'un rayonnement incident (R), **caractérisé en ce que** le scintillateur comprend au moins une seconde plaque (5) d'un second matériau apte à émettre des photons (Φ) en fonction du rayonnement incident (R) et **en ce que** la première plaque (4) et la seconde plaque (5) sont assemblées par la tranche de la première plaque par des moyens de liaison (6) absorbant tout ou partie des photons (Φ) émis par la première plaque et la seconde plaque (4, 5), les moyens optiques collectant les photons émis dans une direction essentiellement perpendiculaire au plan d'extension de la première plaque, la première plaque et la seconde plaque étant chacune aptes à former une image destinée au capteur,
dans lequel les dimensions de la première plaque et les dimensions de la seconde plaque perpendiculaires à la tranche de la première plaque sont supérieures à dix fois la résolution spatiale du dispositif d'imagerie dans le plan du scintillateur.

2. Dispositif d'imagerie selon la revendication 1, dans lequel l'épaisseur de la plaque est inférieure à la moitié de chacune des deux autres dimensions de la plaque.

3. Dispositif d'imagerie selon la revendication 1 ou 2, dans lequel le second matériau est identique au premier matériau.

4. Dispositif d'imagerie selon l'une des revendications 1 à 3, dans lequel le premier matériau est un cristal.

5. Dispositif d'imagerie selon la revendication 4, dans lequel le premier matériau est un matériau de masse volumique supérieure à 5 g/cm³.

6. Dispositif d'imagerie selon l'une des revendications 1 à 5, dans lequel les moyens de liaison possèdent un coefficient d'absorption d'au moins 50 % sur l'épaisseur de ladite liaison.

7. Dispositif d'imagerie selon la revendication 6, dans lequel les moyens de liaison possèdent un coefficient d'absorption d'au moins 90% sur l'épaisseur de ladite liaison.

8. Dispositif d'imagerie selon l'une des revendications 1 à 7, dans lequel les moyens de liaison comprennent une colle absorbante dans une partie au moins du spectre visible.

9. Dispositif d'imagerie selon la revendication 8, dans lequel la colle absorbante comporte un additif colorant.

10. Dispositif d'imagerie selon la revendication 9, dans lequel l'additif est une poudre de carbone colloïdal.

11. Dispositif d'imagerie selon l'une des revendications 1 à 10 comprenant un élément de structuration essentiellement parallèle à l'une des deux grandes faces de la première plaque et assemblé à cette face de la première plaque et à une face de la seconde plaque.

12. Dispositif d'imagerie selon l'une des revendications 1 à 11 comprenant un cadre de structuration enserrant le scintillateur.

13. Dispositif d'imagerie selon l'une des revendications 1 à 12, dans lequel le couplage optique entre le scintillateur et le capteur est réalisé avec une faible ouverture numérique objet.

14. Dispositif d'imagerie selon la revendication 13, dans lequel l'ouverture numérique objet est inférieure à 5 degrés de demi-angle.

## Claims

1. Imaging device comprising a scintillator, an image sensor and optical means for coupling the scintillator to the sensor, the scintillator (2) comprising a first plate (4) of a first material able to emit photons (Φ) as a function of an incident radiation (R), **characterised in that** the scintillator comprises at least a second plate (5) of a second material able to emit photons (Φ) as a function of the incident radiation (R) and **in that** the first plate (4) and the second plate (5) are assembled by the edge surface of the first plate by connecting means (6) absorbing some or all of the photons (Φ) emitted by the first plate and the second plate (4, 5), the optical means collecting the photons emitted in a direction essentially perpendicular to the plane of the first plate, the first plate and the second plate each being able to form an image intended for the sensor,
wherein the dimensions of the first plate and the dimensions of the second plate perpendicular to the edge surface of the first plate are greater than ten times the spatial resolution of the imaging device in the plane of the scintillator.

2. Imaging device according to claim 1, wherein the thickness of the plate is less than half each of the other two dimensions of the plate.

3. Imaging device according to claim 1 or 2, wherein the second material is identical to the first material.

4. Imaging device according to any of claims 1 to 3, wherein the first material is a crystal.

5. Imaging device according to claim 4, wherein the first material is a material having a density greater than 5 g/cm³.

6. Imaging device according to any of claims 1 to 5, wherein the connecting means have an absorption coefficient of at least 50% over the thickness of said connection.

7. Imaging device according to claim 6, wherein the connecting means have an absorption coefficient of at least 90% over the thickness of said connection.

8. Imaging device according to any of Claims 1 to 7, wherein the connection means comprise a glue absorbent in at least part of the visible spectrum.

9. Imaging device according to claim 8, wherein the absorbent glue includes a coloring agent additive.

10. Imaging device according to claim 9, wherein the additive is a colloidal carbon powder.

11. Imaging device according to any of claims 1 to 10, comprising a structuring element essentially parallel to one of the two large faces of the first plate and assembled to that face of the first plate and to one face of the second plate.

12. Imaging device according to any of claims 1 to 11 comprising a structural frame gripping the scintillator.

13. Imaging device according to any of claims 1 to 12, wherein the optical coupling between the scintillator and the sensor is produced with a low object numerical aperture.

14. Imaging device according to claim 13, wherein the object numerical aperture is less than 5 degrees half-angle.

## Patentansprüche

1. Abbildungsvorrichtung mit einem Szintillator, einem Bildsensor und optischen Mitteln zum Ankoppeln des Szintillators an den Sensor, wobei der Szintillator (2) eine erste Platte (4) aus einem ersten Material aufweist, das in Abhängigkeit von einer einfallenden Strahlung (R) Photonen (Φ) emittieren kann,
**dadurch gekennzeichnet, dass**
der Szintillator zumindest eine zweite Platte (5) aus einem zweiten Material aufweist, das in Abhängigkeit von der einfallenden Strahlung (R) Photonen (Φ) emittieren kann, und dass die erste Platte (4) und die zweite Platte (5) an der Randkante der ersten Platte über Verbindungsmittel (6) zusammengefügt sind, welche die von der ersten Platte und der zweiten Platte (4, 5) emittierten Photonen (Φ) ganz oder teilweise absorbieren, wobei die optischen Mittel die emittierten Photonen in einer Richtung sammeln, die im Wesentlichen senkrecht zu der Ausdehnungsebene der ersten Platte verläuft, wobei die erste Platte und die zweite Platte jeweils in der Lage sind, ein Bild zu bilden, das für den Sensor bestimmt ist,
wobei die Abmessungen der ersten Platte und die Abmessungen der zweiten Platte senkrecht zu der Randkante der ersten Platte größer sind als das Zehnfache der Raumauflösung der Abbildungsvorrichtung in der Ebene des Szintillators.

2. Abbildungsvorrichtung nach Anspruch 1,
wobei die Dicke der Platte kleiner als die Hälfte einer jeden der beiden weiteren Abmessungen der Platte ist.

3. Abbildungsvorrichtung nach Anspruch 1 oder 2,
wobei das zweite Material identisch zu dem ersten Material ist.

4. Abbildungsvorrichtung nach einem der Ansprüche 1 bis 3,
wobei das erste Material ein Kristall ist.

5. Abbildungsvorrichtung nach Anspruch 4,
wobei das erste Material ein Material mit einer Dichte von über 5 g/cm³ ist.

6. Abbildungsvorrichtung nach einem der Ansprüche 1 bis 5,
wobei die Verbindungsmittel einen Absorptionskoeffizient von mindestens 50 % über die Dicke der Verbindung besitzen.

7. Abbildungsvorrichtung nach Anspruch 6,
wobei die Verbindungsmittel einen Absorptionskoeffizient von mindestens 90 % über die Dicke der Verbindung besitzen.

8. Abbildungsvorrichtung nach einem der Ansprüche 1 bis 7,
wobei die Verbindungsmittel einen Klebstoff aufweisen, der zumindest in einem Teil des sichtbaren Spektrums absorbierend ist.

9. Abbildungsvorrichtung nach Anspruch 8,
wobei der absorbierende Klebstoff einen Farbzusatz enthält.

10. Abbildungsvorrichtung nach Anspruch 9,
wobei der Zusatz ein Pulver aus kolloidalem Kohlenstoff ist.

11. Abbildungsvorrichtung nach einem der Ansprüche 1 bis 10, enthaltend ein Strukturierungselement, das im Wesentlichen parallel zu einer der beiden großen Flächen der ersten Platte verläuft und mit dieser Fläche der ersten Platte und mit einer Fläche der zweiten Platte zusammengefügt ist.

12. Abbildungsvorrichtung nach einem der Ansprüche 1 bis 11, enthaltend einen Strukturierungsrahmen, der den Szintillator einspannt.

13. Abbildungsvorrichtung nach einem der Ansprüche 1 bis 12,
wobei die optische Kopplung zwischen dem Szintillator und dem Sensor mit einer geringen numerischen Objekt-Apertur erfolgt.

14. Abbildungsvorrichtung nach Anspruch 13,
wobei die numerische Objekt-Apertur unter 5° Halbwinkel liegt.
